# EUROPÄISCHE PATENTSCHRIFT

(11) **EP 2 374 638 B1**
(45) Veröffentlichungstag und Bekanntmachung des Hinweises auf die Patenterteilung: **15.01.2014**
(21) Anmeldenummer: 11157572.6
(22) Anmeldetag: 10.03.2011
(51) Int. Cl.: B60G 17/048, B60G 17/027, B60G 15/06

(54) **Federbein mit Niveauregelfunktion**
Suspension strut with level regulator function
Jambe de force dotée d'une fonction de réglage de niveau

(30) Priorität: 10.04.2010 DE 102010014569
(43) Veröffentlichungstag der Anmeldung: 12.10.2011
(73) Patentinhaber: ZF Friedrichshafen AG, 88038 Friedrichshafen (DE)
(72) Erfinder: Beck, Hubert, 53783, Eitorf (DE)

(56) Entgegenhaltungen:
- DE-B3-102004 011 632

## Beschreibung

Die Erfindung betrifft ein Federbein mit Niveauregelfunktion gemäß dem Oberbegriff von Patentanspruch 1.

Aus der DE 10 2004 011 632 B3 ist ein Federbein mit Niveauregelfunktion bekannt, bei dem mittels einer Pumpfunktion die Hublage eines axial verschiebbaren Federtellers einer statischen Belastung angepasst werden kann. Der Federteller ist auf einer äußeren Mantelfläche eines Zylinders geführt, dessen Innenwandung eine Gleitfläche für einen axial verschiebbaren Kolben bildet. Folglich müssen sowohl der Innen- wie auch der Außendurchmesser hinsichtlich der Maße und der Form sehr präzise ausgeführt sein. Die geforderte Genauigkeit ist bei einem gezogen Rohr als Halbzeug für den Zylinder kaum einzuhalten. Eine der Flächen muss nachgearbeitet werden, wodurch das Federbein insgesamt verteuert wird.

Die Aufgabe der vorliegenden Erfindung besteht darin, ein kostengünstiges Federbein mit Niveauregelfunktion zu schaffen, bei dem das aus dem Stand der Technik bekannte Problem behoben ist.

Erfindungsgemäß wird die Aufgabe dadurch gelöst, dass der Ringzylinder kolbenstangenseitig befestigt ist und im Ringzylinder ein auf den Federteller wirkender Stellkolben angeordnet ist.

Der große Vorteil der Erfindung im Vergleich zum Stand der Technik besteht darin, dass man einen Zylinder verwenden kann, der von einem unbearbeiteten Halbzeug gebildet werden kann. Die Außenmantelfläche des Zylinders dient nicht als Gleitfläche für den Stellkolben. Der zylinderseitige Federteller kann beliebig fixiert sein.

In weiterer vorteilhafter Ausgestaltung ist der Stellkolben auf der äußeren Mantelfläche der Kolbenstange axial verschiebbar geführt. Die Kolbenstange bildet demnach einen Teil des Stellzylinders. Ein zusätzlicher Bearbeitungsaufwand muss deshalb nicht geleistet werden, da die Mantelfläche bereits für eine ohnehin vorhandene Kolbenstangendichtung bearbeitet ist.

Im Hinblick auf eine optimale Bauraumausnutzung ist der Ringzylinder Bestandteil eines kolbenstangenseitigen Anschlussorgans.

Um einen insgesamt einfachen Aufbau des Aggregats zu verfolgen, weist die Kolbenstange einen Radialanschluss zwischen der Pumpeinrichtung und dem Stellzylinder auf. Externe Leitungen können demnach entfallen.

Gemäß einem vorteilhaften Unteranspruch ist der Stellzylinder mit einem Anschlag zur Bestimmung der maximalen Ausfahrposition des Stellkolbens versehen. Des Weiteren liegt dann eine in sich geschlossene Baugruppe vor, die unabhängig vom Gesamtaggregat montiert werden und nach der Montage nicht auseinander fallen kann.

Zusätzlich besteht die Möglichkeit, dass an dem Stellkolben in Richtung einer Stirnfläche des Zylinders eine Druckanschlagfeder angeordnet ist. Folglich wird der Einsatzpunkt der Druckanschlagfeder ebenfalls mitverstellt.

Um einen Hubverlust der Kolbenstange zu vermeiden, weist der Stellkolben eine topfförmige Grundform mit einer Verbindungshülse zum Federteller auf, deren Innendurchmesser größer ist als der Außendurchmesser des Zylinders.

Bei einer Ausführung der Erfindung ist die Druckanschlagfeder ortsfest zur Kolbenstange ausgeführt und der Stellkolben gleitet auf einer ortsfest zum Anschlussorgan ausgeführten Innenhülse. Diese Konstruktion ermöglicht einen größeren Hubweg bis zum Einsatz der Druckanschlagfeder, so dass eine eher komfortorientierte Federkennung des Federbeins erreicht wird.

Gemäß einem vorteilhaften Unteranspruch ist der Ringzylinder über einen Radialkanal mit einem Innenraum innerhalb der Kolbenstange verbunden. Durch die interne Kanalführung können separate Leitungen vermieden werden.

Anhand der folgenden Figurenbeschreibung soll die Erfindung näher erläutert werden.

Es zeigt:
- Fig. 1: Federbein mit Stellkolben in maximaler Einfahrposition
- Fig. 2: Federbein mit Stellkolben in maximaler Ausfahrposition
- Fig. 3: Federbein mit ortsfester Druckanschlagfeder

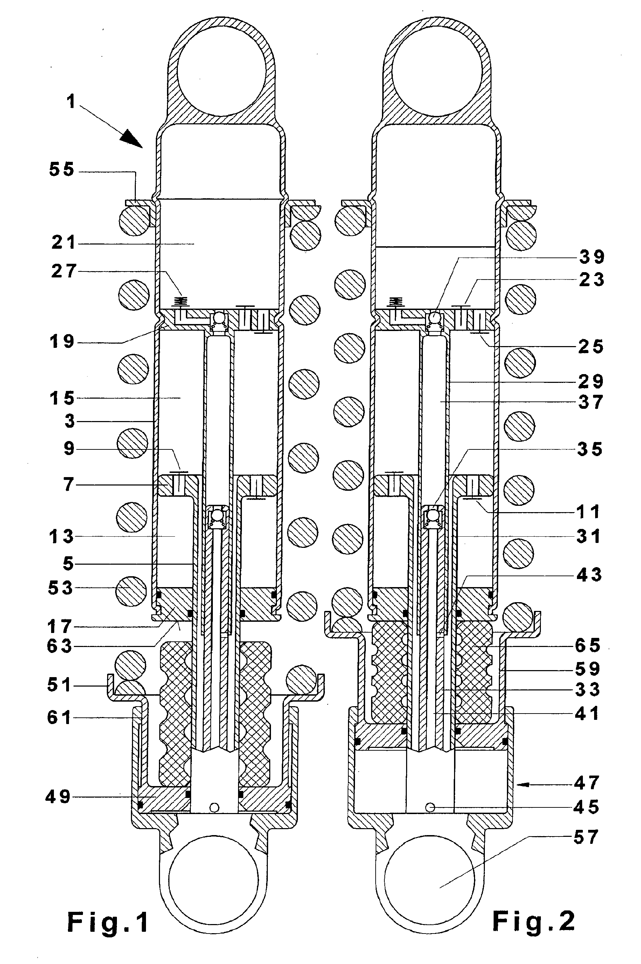

Die Figur 1 zeigt ein Federbein 1 in Einrohrbauweise, wobei die Erfindung nicht auf eine derartige Ausführung beschränkt ist. In einem Zylinder 3 des Federbeins 1 ist eine hohle Kolbenstange 5 zusammen mit einem Kolben 7 axial beweglich geführt. Der Kolben 7 ist mit Dämpfventilen 9; 11 für eine Ein- und eine Ausfahrbewegung bestückt und trennt den Zylinder 3 in einen jeweils vollständig mit Dämpfmedium gefüllten kolbenstangenseitigen und einen kolbenstangenfernen Arbeitsraum 13; 15. Der kolbenstangenseitige Arbeitsraum 13 wird endseitig von einer Kolbenstangenführung 17 und der kolbenstangenferne Arbeitsraum 15 von einer Trennwand 19 begrenzt. Der axial festen Trennwand 19 im Zylinder 3 schließt sich ein zumindest teilweise mit Dämpfmedium gefüllter Ausgleichsraum 21 an. In der Trennwand 19 ist zusätzlich ein Dämpfventil 23 für die Einfahrrichtung der Kolbenstange und ein Saugventil 25 für die Ausfahrrichtung angeordnet. Optional kann ein Überlastventil 27 vorgesehen sein.

Auf der Trennwand 19 in Richtung der Kolbenstange 5 stützt sich eine Steuerhülse 29 ab, deren Außendurchmesser kleiner ist als der Innendurchmesser der hohlen und in Richtung der Trennwand 19 offenen Kolbenstange 5, so dass ein Ringanschlusskanal 31 vorliegt, dessen Länge von der Hublage der Kolbenstange 5 im Zylinder 3 bzw. in der Steuerhülse 29 abhängt. Innerhalb und an der Kolbenstange 5 befestigt erstreckt sich eine hohle Pumpenstange 33, die abgedichtet in der Steuerhülse 29 gleitet. Die Pumpenstange 33 verfügt an ihrem in Richtung der Trennwand 19 weisenden Ende über ein Rückschlagventil 35, das bei einer Einfahrbewegung der Kolbenstange 5 öffnet. Ein Pumpenraum 37 innerhalb der Steuerhülse 29 verfügt ebenfalls über ein an den Ausgleichsraum 21 angeschlossenes Rückschlagventil 39, das bei einer Ausfahrbewegung der Kolbenstange 5 öffnet. Zwischen einem Innenraum 41 der Pumpenstange 33 und dem Ringanschlusskanal 31 besteht eine radiale Anschlussöffnung 43, die bei Unterschreiten einer angestrebten Niveaulage von der Steuerhülse 29 verschlossen und bei einer Ausfahrposition der Kolbenstange 5 jenseits der angestrebten Niveaulage freigegeben wird. Das Überlastventil 27 ist dem Rückschlagventil 39 hydraulisch parallel geschaltet und verbindet im Überlastfall den Pumpenraum 37 mit dem Ausgleichsraum 21.

Der Innenraum 41 der Pumpenstange 33 ist über mindestens einem Radialanschluss 45 mit einem Ringzylinder 47 verbunden. Der Ringzylinder 47 ist kolbenstangenseitig befestigt, wobei ein axial beweglicher Stellkolben 49 im Ringzylinder 47 an einen kolbenstangenseitigen Federteller 51 angeschlossen ist. Eine Tragfeder 53 ist zwischen dem Federteller 51 am Stellkolben 49 und einem zum Zylinder 3 ortsfesten Federteller 55 verspannt.

Der Stellkolben 49 ist Bestandteil eines kolbenstangenseitigen Anschlussorgans 57 und auf einer äußeren Mantelfläche der Kolbenstange 5 axial beweglich geführt. Des Weiteren weist der Stellkolben 49 eine topfförmige Grundform mit einer Verbindungshülse 59 zum Federteller 51 auf, wobei der Innendurchmesser der Verbindungshülse 59 größer ist als der Außendurchmesser des Zylinders 3, um ggf. den Zylinder 3 teilweise aufnehmen zu können.

Der Ringzylinder 47 ist mit einem Anschlag 61 zur Bestimmung der maximalen Ausfahrposition des Stellkolbens 49 versehen. Beispielhaft wird der Anschlag 61 von einem nach radial innen abgewinkeltem Randbereich des Ringzylinders 47 gebildet.

Optional trägt der Stellkolben 49 in Richtung einer äußeren Stirnfläche 63 des Zylinders 3 eine Druckanschlagfeder 65, die in Abhängigkeit der Kolbenstangenposition eine weitere Stützkraft erzeugt.

Befindet sich die Kolbenstange 5 aufgrund einer statischen Last in einer Einfahrposition, bei der die Steuerhülse 29 die Anschlussöffnung 43 zwischen der Pumpenstange 33 und dem Ringanschlusskanal verschließt, dann kann das bei einer Einfahrbewegung über das offene Rückschlagventil 35 in die Pumpenstange 33 geförderte Dämpfmedium über den Radialanschluss 45 in den Ringzylinder 47 gefördert werden. Dadurch wird der Stellkolben 49 im Ringzylinder 47 axial in Richtung des Zylinders 3 verschoben (Figur 2), wodurch die Tragfeder 53 stärker vorgespannt wird.

Fährt die Kolbenstange 5 aus, dann kann Dämpfmedium aus dem Ausgleichsraum 21 über das geöffnete Rückschlagventil 39 in der Trennwand 19 in die Steuerhülse 29 bzw. den Pumpenraum 37 einströmen. Der Pumpenraum 37 innerhalb der Steuerhülse 29 ist stets vollständig mit Dämpfmedium gefüllt.

Nimmt die statische Last ab, dann bewegt sich die Kobenstange 5 und damit auch die Pumpenstange 33 aus dem Zylinder 3 heraus. Dabei wird die Anschlussöffnung 43 freigegeben, so dass das im Stellzylinder 47 vorhandene Dämpfmediumvolumen aufgrund der Belastung durch die Tragfeder 53 über die Verschiebebewegung des Stellkolbens 49 in den Ringanschlusskanal 31 entweichen kann. Die Tragfeder 53 entspannt sich aufgrund der Verschiebebewegung des Stellkolbens 49 in Richtung des Anschlussorgans 57, so dass von dem Federbein 1 ein neuer Kräftegleichgewichtszustand mit einer angepassten Kolbenstangenposition bzw. Niveaulage eingenommen wird.

Neben der Pumparbeit verrichtet das Federbein 1 bei einer Kolbenstangenbewegung noch Dämpfungsarbeit, indem Dämpfmedium über die Dämpfventile 9; 11 zwischen den beiden Arbeitsräumen 13; 15 ausgetauscht wird. Überschüssiges Dämpfmediumvolumen entsprechend dem von der hohlen Kolbenstange 5 verdrängten Volumen wird aus dem kolbenstangenfernen Arbeitsraum 15 in den Ausgleichsraum 21 verdrängt. Bei einer Kolbenstangenausfahrbewegung kann Dämpfmedium aus dem Ausgleichsraum 21 über das Saugventil 25 in den kolbenstangenfernen Arbeitsraum 15 nachfliessen.

Das in Richtung des Ausgleichsraums 21 öffnende Überlastventil 27 verhindert das Weiterpumpen des Federbeins 1 bei maximal gefülltem Ringzylinder 47.

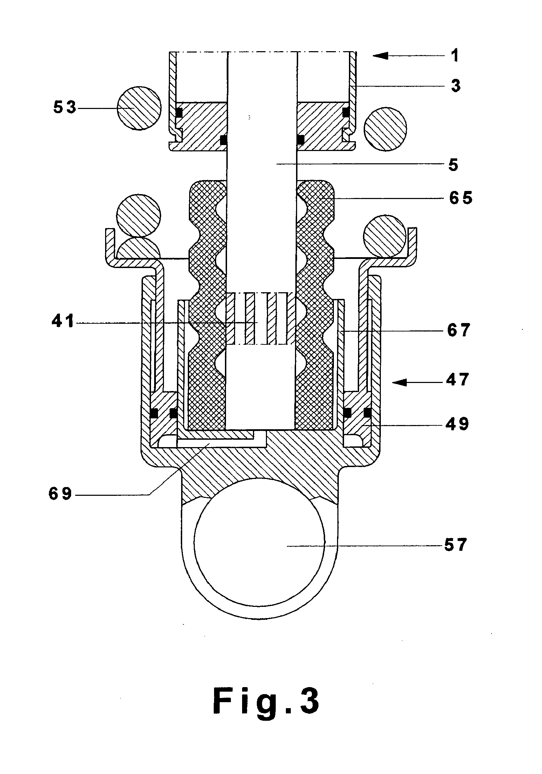

Die Fig. 3 zeigt einen Teilausschnitt eines Federbeins 1 mit einem Zylinder 3 und einer Kolbenstange 5 gemäß den Fig. 1 und 2. Abweichend ist die Druckanschlagfeder 65 unabhängig vom Stellkolben 49 ortsfest zur Kolbenstange 5 ausgeführt, d. h. es liegt keine feste Verbindung zwischen dem Stellkolben 49 und der Druckanschlagfeder 65 vor. Die Druckanschlagfeder 65 kann wahlweise mit ihrem Innen- oder Außendurchmesser eine Presspassung eingehen, um axial gesichert zu sein. Ein weiterer Unterschied zu den Fig. 1 und 2 besteht darin, dass der Stellkolben nicht auf der Mantelfläche der Kolbenstange 5 gleitet, sondern auf einer Innenhülse 67, die ortsfest zum Anschlussorgan 57 ausgeführt ist. Zwischen dem Innenraum 41 der Kolbenstange 5 und dem Ringzylinder 47 besteht mindestes ein Radialkanal 69, der die Dämpfmediumverbindung zwischen den Räumen innerhalb des Zylinders 3 und dem Ringzylinder 47 darstellt.

Unabhängig von der Position des Stellkolbens 49 bzw. der Vorspannung der Tragfeder 53 wird der Einsatzpunkt der Druckanschlagfeder 65 bei gleicher dynamischer Anregung des Federbeins 1 so gehalten, wie bei einem Fahrzeug, dass nur geringfügig beladen ist.

### Bezugszeichenliste

- 1: Federbein
- 3: Zylinder
- 5: Kolbenstange
- 7: Kolben
- 9; 11: Dämpfventil
- 13: kolbenstangenseitiger Arbeitsraum
- 15: kolbenstangenferner Arbeitsraum
- 17: Kolbenstangenführung
- 19: Trennwand
- 21: Ausgleichsraum
- 23: Dämpfventil
- 25: Saugventil
- 27: Überlastventil
- 29: Steuerhülse
- 31: Ringanschlusskanal
- 33: Pumpenstange
- 35: Rückschlagventil
- 37: Pumpenraum
- 39: Rückschlagventil
- 41: Innenraum
- 43: radiale Anschlussöffnung
- 45: Radialanschluss

- 47: Ringzylinder
- 49: Stellkolben
- 51: Federteller
- 53: Tragfeder
- 55: Federteller
- 57: Anschlussorgan
- 59: Verbindungshülse
- 61: Anschlag
- 63: Stirnfläche
- 65: Druckanschlagfeder
- 67: Innenhülse
- 69: Radialkanal

## Patentansprüche

1. Federbein (1) mit Niveauregelfunktion, umfassend einen Zylinder (3), in dem eine hohle Kolbenstange (5) mit einem Kolben (7) axial beweglich geführt ist, wobei der Kolben (7) den mit Dämpfmedium gefüllten Zylinder (3) in einen kolbenstangenseitigen und einen kolbenstangenfernen Arbeitsraum (13; 15) unterteilt, mit einem zumindest teilweise mit Dämpfmedium gefüllten Ausgleichsraum (21), sowie einen Ringzylinder (47), der an einen axial verschiebbaren Federteller (51) angeschlossen und von einer Pump- und Regeleinrichtung (29; 33; 37;35;39) in der hohlen Kolbenstange (5) mit Dämpfmedium befüllt wird,
**dadurch gekennzeichnet,**
**dass** der Ringzylinder (47) kolbenstangenseitig befestigt ist und im Ringzylinder (47) ein auf den Federteller (51) wirkender Stellkolben (49) angeordnet ist.

2. Federbein nach Anspruch 1,
**dadurch gekennzeichnet,**
**dass** der Stellkolben (49) auf der äußeren Mantelfläche der Kolbenstange (5) axial verschiebbar geführt ist.

3. Federbein nach Anspruch 1,
**dadurch gekennzeichnet,**
**dass** der Ringzylinder (47) Bestandteil eines kolbenstangenseitigen Anschlussorgans (57) ist.

4. Federbein nach Anspruch 1,
**dadurch gekennzeichnet,**
**dass** die Kolbenstange (5) einen Radialanschluss (45) zwischen der Pumpeinrichtung (29; 33; 35; 37; 39) und dem Ringzylinder (47) aufweist.

5. Federbein nach Anspruch 1,
**dadurch gekennzeichnet,**
**dass** der Ringzylinder (47) mit einem Anschlag (61) zur Bestimmung der maximalen Ausfahrposition des Stellkolbens (49) versehen ist.

6. Federbein nach Anspruch 1,
**dadurch gekennzeichnet,**
**dass** an dem Stellkolben (49) in Richtung einer Stirnfläche (63) des Zylinders (3) eine Druckanschlagfeder (65) angeordnet ist.

7. Federbein nach Anspruch 1,
**dadurch gekennzeichnet,**
**dass** der Stellkolben (49) eine topfförmige Grundform mit einer Verbindungshülse (59) zum Federteller (51) aufweist, deren Innendurchmesser größer ist als der Außendurchmesser des Zylinders (3).

8. Federbein nach Anspruch 1,
**dadurch gekennzeichnet,**
**dass** die Druckanschlagfeder (65) ortsfest zur Kolbenstange (5) ausgeführt ist und der Stellkolben (49) auf einer ortsfest zum Anschlussorgan (57) ausgeführten Innenhülse (67) gleitet.

9. Federbein nach Anspruch 1,
**dadurch gekennzeichnet,**
**dass** der Ringzylinder (47) über einen Radialkanal (69) mit einem Innenraum (41) innerhalb der Kolbenstange (5) verbunden ist.

## Claims

1. Suspension strut (1) with ride-height control function, comprising a cylinder (3) in which a hollow piston rod (5) with a piston (7) is guided in an axially movable manner, wherein the piston (7) divides the cylinder (3), which is filled with damping medium, into a piston-rod-side working chamber (13) and a working chamber (15) which is remote from the piston rod, with a compensation chamber (21) which is at least partially filled with damping medium, and comprising an annular cylinder (47) which is connected to an axially displaceable spring plate (51) and which is filled with damping medium by a pumping and regulating device (29; 33; 37; 35; 39) in the hollow piston rod (5),
**characterized**
**in that** the annular cylinder (47) is fastened to the piston rod, and an actuating piston (49) which acts on the spring plate (51) is arranged in the annular cylinder (47).

2. Suspension strut according to Claim 1, **characterized**
**in that** the actuating piston (49) is guided in an axially displaceable manner on the outer shell surface of the piston rod (5).

3. Suspension strut according to Claim 1, **characterized**
**in that** the annular cylinder (47) is a constituent part of a piston-rod-side attachment element (57).

4. Suspension strut according to Claim 1, **characterized**
**in that** the piston rod (5) has a radial port (45) between the pumping device (29; 33; 35; 37; 39) and the annular cylinder (47).

5. Suspension strut according to Claim 1, **characterized**
**in that** the annular cylinder (47) is provided with a stop (61) for determining the maximum deployment position of the actuating piston (49).

6. Suspension strut according to Claim 1, **characterized**
**in that** a compression stop spring (65) is arranged on the actuating piston (49) in the direction of an end face (63) of the cylinder (3).

7. Suspension strut according to Claim 1, **characterized**
**in that** the actuating piston (49) has a pot-shaped basic form with a connecting sleeve (59) to the spring plate (51), the inner diameter of which connecting sleeve is greater than the outer diameter of the cylinder (3).

8. Suspension strut according to Claim 1, **characterized**
**in that** the compression stop spring (65) is designed so as to be positionally fixed with respect to the piston rod (5), and the actuating piston (49) slides on an inner sleeve (67) which is designed so as to be positionally fixed with respect to the attachment element (57).

9. Suspension strut according to Claim 1, **characterized**
**in that** the annular cylinder (47) is connected via a radial duct (69) to an interior space (41) within the piston rod (5).

## Revendications

1. Jambe de force (1) dotée d'une fonction de réglage de niveau, comprenant un cylindre (3) dans lequel est guidée de manière déplaçable axialement une tige de piston creuse (5) comprenant un piston (7), le piston (7) divisant le cylindre (3) rempli de milieu d'amortissement en un espace de travail côté tige de piston et un espace de travail éloigné de la tige de piston (13 ; 15), avec un espace de compensation (21) rempli au moins en partie de milieu d'amortissement, et comprenant un cylindre annulaire (47), qui est raccordé à une coupelle de ressort (51) déplaçable axialement et qui est rempli de milieu d'amortissement par un dispositif de pompage et de régulation (29 ; 33 ; 37 ; 35 ; 39) dans la tige de piston creuse (5), **caractérisée en ce que**
le cylindre annulaire (47) est fixé du côté de la tige de piston et un piston de réglage (49) agissant sur la coupelle de ressort (51) est disposé dans le cylindre annulaire (47).

2. Jambe de force selon la revendication 1, **caractérisée en ce que**
le piston de réglage (49) est guidé de manière déplaçable axialement sur la surface d'enveloppe extérieure de la tige de piston (5).

3. Jambe de force selon la revendication 1, **caractérisée en ce que**
le cylindre annulaire (47) fait partie d'un organe de raccordement du côté de la tige de piston (57).

4. Jambe de force selon la revendication 1, **caractérisée en ce que**
la tige de piston (5) présente un raccordement radial (45) entre le dispositif de pompage (29 ; 33 ; 35 ; 37 ; 39) et le cylindre annulaire (47).

5. Jambe de force selon la revendication 1, **caractérisée en ce que**
le cylindre annulaire (47) est pourvu d'une butée (61) pour déterminer la position de sortie maximale du piston de réglage (49).

6. Jambe de force selon la revendication 1, **caractérisée en ce**
**qu'**un ressort de butée de pression (65) est disposé sur le piston de réglage (49) dans la direction d'une face frontale (63) du cylindre (3) .

7. Jambe de force selon la revendication 1, **caractérisée en ce que**
le piston de réglage (49) présente une forme de base en forme de pot avec une douille de liaison (59) à la coupelle de ressort (51), dont le diamètre intérieur est supérieur au diamètre extérieur du cylindre (3).

8. Jambe de force selon la revendication 1, **caractérisée en ce que**
le ressort de butée de pression (65) est réalisé fixement par rapport à la tige de piston (5) et le piston de réglage (49) glisse sur une douille intérieure (67) réalisée fixement par rapport à l'organe de raccordement (57).

9. Jambe de force selon la revendication 1, **caractérisée en ce que**
le cylindre annulaire (47) est connecté par le biais d'un canal radial (69) à un espace interne (41) à l'intérieur de la tige de piston (5).
